Europäisches Patentamt

European Patent Office

Office européen des brevets

(11) Veröffentlichungsnummer: **0 489 970 A1**

# EUROPÄISCHE PATENTANMELDUNG

(21) Anmeldenummer: **90124280.0**

(51) Int. Cl.5: **H02P 5/402**

(22) Anmeldetag: **14.12.90**

(43) Veröffentlichungstag der Anmeldung:
**17.06.92 Patentblatt 92/25**

(84) Benannte Vertragsstaaten:
**AT BE CH DE DK ES FR GB GR IT LI LU NL SE**

(71) Anmelder: **BSG-Schalttechnik GmbH & Co. KG**
**Meisterstrasse 19**
**W-7460 Balingen 1(DE)**

(72) Erfinder: **Sämann, Rudolf**
**Burgstrasse 12**
**W-7460 Balingen-Ostdorf(DE)**

(74) Vertreter: **Otte, Peter, Dipl.-Ing.**
**Tiroler Strasse 15**
**W-7250 Leonberg(DE)**

(54) **Verfahren und Vorrichtung zum Betrieb von elektrischen Antrieben.**

(57) Zum Betrieb von elektrischen Antrieben und insbesondere von zwei- und mehrpoligen asynchronen Induktionsmotoren zum Antrieb von Geräten mit mindestens zwei erheblich unterschiedlichen Arbeitsgeschwindigkeiten wird vorgeschlagen, mindestens einen zwei- oder mehrpoligen Mehrphasen-Asynchroninduktionsmotor dadurch an einer Einphasen-Netzversorgung (L, N) zu betreiben, daß jeweils ein mit jeder Wicklung (W1, W2, W3) in Reihe liegender Leistungshalbleiterschalter (Triac T1, T2, T3) mit Bezug auf die anderen Reihenhalbleiterschalter zeitlich versetzt und aufeinanderfolgend zu diesen lediglich während einer Halbwelle der Einphasen-Versorgungsspannung leitend gesteuert wird.

Fig.5

## Stand der Technik

Die Erfindung geht aus von einem Verfahren nach dem Oberbegriff des Anspruchs 1 und einer Vorrichtung nach dem Oberbegriff des Anspruchs 3 und ist speziell auf solche elektrischen Antriebsformen gerichtet, die hohe Drehzahl-Untersetzungen bei geringem Aufwand im Wicklungsbereich ermöglichen.

Es ist bekannt, bei Induktions- oder Asynchronmotoren die Ständerwicklung im Innenraum des Ständers so verteilt in Nuten anzuordnen, daß die Wicklungen der einzelnen Phasen nacheinander so eingelegt sind, wie es der zeitlichen Verschiebung der Spannungen und Ströme entspricht, bei einem Drehstrommotor also 120° elektrisch.

Durch die zeitliche Aufeinanderfolge der Höchstwerte des Ständerstroms der einzelnen Phasen wird daher bei Mehrphasen-Asynchronmotoren ein magnetisches Drehfeld hervorgerufen, was nach der bekannten Formel

$$n = \frac{f \cdot 60}{p}$$

für eine bestimmte Frequenz (f) und für eine gegebene Polpaarzahl (p) eine minütliche Umdrehungszahl n des Drehfeldes bewirkt. Der Läufer, der beispielsweise ein Kurzschlußläufer sein kann, versucht diesem Drehfeld zu folgen, erreicht jedoch nie ganz dessen Drehzahl. Durch das insofern asynchrone, weil schlupfbehaftete Verhalten des Läufers wird durch das überholende Feld eine Spannung in dem Läufer induziert, die umso höher ist, je größer der Schlupf ist. Bei einem bestimmten Läuferwiderstand wächst daher auch der Läuferstrom proportional mit dem Schlupf, der, an sich wie bei einem Transformator, unter Vermittlung des magnetischen Feldes von der Primärseite, also vom Ständer gedeckt wird.

Es ist nun üblich, für besondere Antriebsfälle, von denen hier speziell der Betrieb von Waschmaschinen genannt werden soll, obwohl es sich versteht, daß die Erfindung auf einen solchen Anwendungsfall nicht begrenzt ist, Einphasen-Induktionsmotoren mit zwei Geschwindigkeiten zu verwenden, die aus dem üblicherweise überall vorhandenen, ebenfalls einphasigen Netz gespeist werden. Da die als Beispiel genannte Waschmaschine normalerweise mindestens mit zwei zum Teil sehr unterschiedlichen Geschwindigkeiten betrieben wird, nämlich einmal eine möglichst hohe Schleuderdrehzahl und zum anderen die langsamen Waschbewegungsdrehzahlen, die auch durch Reversieren unterbrochen sind, wird der lediglich eine vorhandene Einphasen-Induktionsmotor so ausgerüstet, daß durch eine entsprechende Aufteilung der Spulenpaare und Zuordnung beispielsweise ein zweipoliger Induktionsteilmotor und ein 16-poliger Induktionsteilmotor gebildet sind, so daß sich, wie später noch ausführlich erläutert wird, beispielsweise Drehzahlen von 3000 min$^{-1}$ bzw. 375 min$^{-1}$ ergeben, um hier auch mit numerischen Werten zum besseren Verständnis zu arbeiten.

Es hat sich aber herausgestellt, daß auch bei Ausbildung solcher von Einphasennetzen gespeisten Einphasen-Induktionskombinationsmotoren der gewünschte hohe Untersetzungsgrad in den Drehzahlen nur schwer erreicht werden kann und auch von der Kostenseite, nämlich wegen der hohen Anzahl der erforderlichen Wicklungsspulen problematisch ist.

Der Erfindung liegt daher die Aufgabe zugrunde, ein Verfahren bzw. eine Vorrichtung zum Betrieb von elektrischen Induktionsmotoren zu schaffen, die sicherstellen, daß bei geringerem Aufwand und weniger Spulenpaaren mindestens gleiche, wenn nicht noch höhere Untersetzungsverhältnisse in den Drehzahlen erzielt werden können bei insgesamt geringeren Kosten.

## Vorteile der Erfindung

Die Erfindung löst diese Aufgabe mit den kennzeichnenden Merkmalen des Anspruchs 1 bzw. des Anspruchs 3 und hat den Vorteil, daß es zunächst einmal möglich ist, einen Dreiphasen-Induktionsmotor, also einen Drehstrommotor ohne größeren Aufwand an einem Einphasennetz zu betreiben, indem in Reihe mit den drei Wicklungsspulen des Drehstrommotors Triacs oder sonstige geeignete Leistungshalbleiter, beispielsweise auch MOS-FET u. dgl., geschaltet sind, die sukzessive so angesteuert werden, daß sich ein gewünschtes magnetisches Drehfeld mit einer auf ein Drittel herabgesetzten Frequenz, verglichen zur Frequenz der speisenden Einphasenwechselspannung, ergibt.

Je nach der Polpaarzahl p des Induktionsmotors ergibt sich dann die gewünschte Untersetzung entsprechend der schon genannten Formel.

Im folgenden wird dann anhand von numerischen Zahlenbeispielen noch dargelegt, daß die erfindungsgemäße Verwendung eines Mehrphasenmotors allgemein, speziell also eines Dreiphasenmotors zum Betrieb von Waschmaschinen und ähnlichen Geräten nicht nur hinsichtlich der Gewinnung eines höheren Untersetzungsverhältnisses günstig ist, sondern auch mit Bezug auf die jeweils erforderliche Anzahl von Spulenpaaren.

Dabei ist es ferner bei Verwendung eines über eine gerichtete Triac-Ansteuerung seiner Spulenwicklungen beaufschlagten Dreiphasen-Induktionsmotors nicht mehr notwendig, für niedrige Geschwindigkeiten einen Kondensator entsprechend hoher Kapazität zu verwenden, wobei auch eine Drehrichtungsumkehr bei einem gesteuerten Dreiphasenmotor wesentlich einfacher ist als bei einem sonst üblicherweise verwendeten Einphasen-Induktionsmotor, indem man nämlich einfach die Triggerung von zwei der in Reihe mit den drei Spulen vorgesehenen Triacs lediglich zeitlich vertauscht. Auch ist das erzielte Drehmoment bei sonst vergleichbarem Aufbau bei Verwendung eines Dreiphasenmotors wesentlich höher.

Vorteilhaft ist ferner, daß mit dem Motor ein Tachogenerator mechanisch gekoppelt werden kann, so daß die Geschwindigkeit unter Zugrundelegung einer elektronischen Steuerschaltung, wie sie ohnehin für die Ansteuerung der Triacs benötigt wird, in der gleichen Weise gesteuert werden kann, wie dies bei einigen, Einphasen-Induktionsmotoren mit zwei Geschwindigkeiten verwendenden Waschmaschinen und sonstigen Geräten üblich ist.

Ein weiterer Vorteil bei vorliegender Erfindung liegt darin, daß die jeder Windung zugeführte mittlere Spannung durch Veränderung der Dauer variiert werden kann, während welcher der zugeordnete Triac leitend gesteuert ist, so daß man auf diese Weise auch das Drehmoment des Motors, in Abhängigkeit zur gemessenen und vorgegebenen Geschwindigkeit, variieren kann.

Schließlich ist es unter Zugrundelegung der vorhandenen elektronischen Schaltung in der gleichen Weise problemlos möglich, automatisch auf einen Einphasen-Hochgeschwindigkeitsbetrieb umzuschalten, wenn die voreingestellte Drehzahl, also die Solldrehzahl gleich oder größer als die Synchrongeschwindigkeit im geschalteten Dreiphasenbetrieb ist.

Weitere Vorteile bestehen darin, daß bei Ausfall eines Triacs, beispielsweise wenn dieser einen Kurzschluß bildet, die Drehzahl des gesteuerten Mehrphasenmotors nicht ansteigt, wie dies bei einem Universalmotor der Fall ist; ferner besteht kein Bedarf für einen zusätzlichen elektromechanischen Schalter für eine Drehrichtungsumkehr des Elektromotors bei allgemein wesentlich ruhigerem, leiserem Lauf, wobei gleichzeitig auch noch wesentlich geringere Hochfrequenzstörungen erzeugt werden.

Durch die in den Unteransprüchen aufgeführten Maßnahmen sind vorteilhafte Weiterbildungen und Verbesserungen der Erfindung möglich. Wird beispielsweise entsprechend einem bevorzugten Ausführungsbeispiel ein kombinierter geschalteter achtpoliger Dreiphasen-Induktionsmotor und ein zweipoliger Einphasen-Induktionsmotor verwendet, dann ist vorteilhaft, daß das in der zweipoligen Konfiguration zur Verfügung gestellte niedrige Drehmoment eine Drehbewegung dann ausschließt, wenn sich innerhalb der Waschmaschine Wasser befindet, dieses also für einen Schleudervorgang noch nicht abgepumpt worden ist. Hierdurch ergibt sich eine zusätzliche Sicherheit im Betrieb einer Waschmaschine-wie überhaupt ein bevorzugtes Anwendungsbeispiel vorliegender Erfindung im Waschmaschinenbereich liegt.

Es muß aber nochmals darauf hingewiesen werden, daß sowohl der im folgenden bevorzugt beschriebene Anwendungsbereich auf den Waschmaschinenbetrieb als auch die im einzelnen genannten jeweiligen numerischen Werte lediglich zum besseren Verständnis der Erfindung dienen und diese nicht auf den insoweit beschriebenen Rahmen beschränkt ist.

Schließlich ergibt sich ein weiterer Vorteil vorliegender Erfindung dadurch, daß auch bei einem Ausfall eines üblicherweise verwendeten Tachogenerators zur rückgeführten Ansteuerung der vorgesehenen Steuerschaltung die maximale Trommelgeschwindigkeit auf die Synchrongeschwindigkeit begrenzt bleibt.

Zeichnung

Ausführungsbeispiele der Erfindung sind in der Zeichnung dargestellt und werden in der nachfolgenden Beschreibung näher erläutert. Es zeigen:

Fig. 1 schematisiert die Schaltung eines über Leistungshalbleiter gesteuerten, an einem Einphasen-Versorgungsnetz liegenden Mehrphasen-Induktionsmotors, nämlich eines Drehstrommotors;

Fig. 2 zeigt in Form eines Diagramms die speisende Einphasen-Wechselspannung und darunter den sich aus dieser durch die Steuerung über die Triacs ergebenden verteilten Stromfluß in jeder Windung;

Fig. 3 zeigt als Vektordiagramm die sich ergebende Drehrichtung des magnetischen Feldes bei einem zweipoligen Drehstrommotor;

Fig. 4 zeigt ein bevorzugtes Ausführungsbeispiel eines kombinierten geschalteten Dreiphasen- sowie eines zweipoligen Einphasen-Induktionsmotors zur Verwendung bei einer Waschmaschine und

Fig. 5 zeigt im einzelnen die Zuordnung des kombinierten Induktionsmotors der Fig. 4 zu einer diesen steuernden elektronischen Steuerschaltung, während schließlich die

Fig. 6 eine mögliche Ausführungsform einer elektronischen Steuerschaltung unter Verwendung eines für sich gesehen bekannten Triggerbausteins (IC) für einen Triac darstellt mit spezieller äußerer Schutzbeschaltung für den Fall eines Triac-Ausfalls (Kurzschluß).

Beschreibung der Ausführungsbeispiele

Der Grundgedanke vorliegender Erfindung besteht darin, anstelle üblicher komplizierter, notwendigerweise über viele Spulenpaare verfügenden Einphasen-Induktionsmotoren bei speziellen Anwendungsfällen einen in seinem Aufbau wesentlich einfacheren Mehrphasenmotor, üblicherweise einen Drehstrommotor vorzusehen und dessen Spulenwicklungen (Ständerwicklungen) über Triacs in einer vorgegebenen Triggerabfolge anzusteuern.

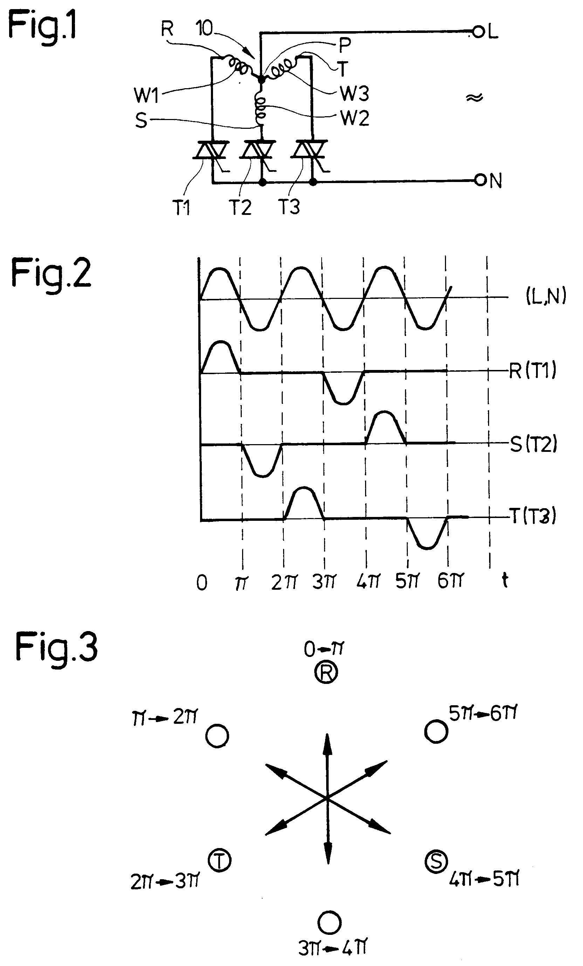

In Fig. 1 ist schematisiert ein Dreiphasen-Induktionsmotor 10 dargestellt, üblicherweise lediglich durch seine Ständerwicklungkonfiguration der jeweils um 120° zueinander versetzt angeordneten Wicklungen W1, W2 und W3, wobei der Sternpunkt P mit dem einen Anschluß L einer einphasigen Speisewechselspannung (Netzspannung) und die äußeren Spulenanschlüsse R, S, T jeweils über gesteuerte Halbleiterschalter, bevorzugt Triacs T1, T2 und T3 mit dem anderen Anschluß N der Netzspannung verbunden sind.

Die Schaltung der Fig. 1 zeigt, daß ein Dreiphasen-Asynchronmotor bzw. -Induktionsmotor dadurch an einem Einphasennetz betrieben werden kann, daß seine Wicklungen jeweils für eine Halbwelle der speisenden Wechselspannung aufeinanderfolgend so über einen dann leitend gesteuerten Halbleiterschalter oder Triac mit der Speisespannung verbunden werden, daß jede der Wicklungen W1, W2 und W3 in zeitlicher Abfolge an die Netzspannung angeschaltet wird, so, wie dies im größeren Detail in Fig. 2 gezeigt ist. Wird nämlich entsprechend Fig. 2 von einer später noch zu erläuternden Steuerschaltung jeder der Triacs T1, T2 und T3 für genau eine Halbwelle der Einphasen-Wechselspannung aufeinanderfolgend leitend geschaltet, dann ergibt sich eine Stromflußverteilung in den einzelnen Phasen R, S, T bzw. Wicklungen des Drehstrommotors der Fig. 1, daß hieraus ein magnetisches Drehfeld mit einer Frequenz resultiert, die bei einem Drittel der Frequenz der Einphasen-Wechselspannung liegt, bei Verwendung eines zweipoligen Drehstrommotors, bzw. bei einem entsprechenden Untervielfachen oder Bruchteil bei einem mehrpoligen Induktionsmotor. In Fig. 2 ist im oberen Diagramm der Verlauf der einphasigen Netzwechselspannung gezeigt; wird jetzt, wie erläutert, aufeinanderfolgend im zeitlichen Abstand von jeweils genau einer Halbwelle zunächst der Triac T1, dann der Triac T2 und dann der Triac T3 und in diesem Zyklus sich wiederholend gezündet, dann ergibt sich die für die drei Phasen R, S und T in dem Diagramm der Fig. 2 über dem Winkel dargestellte Stromverteilung, wie ohne weiteres einzusehen. Diese Stromverteilung bedeutet gleichzeitig, daß an jeder Phasenwicklung eines solchermaßen gesteuerten Dreiphasenmotors eine Spannung mit nur noch einem Drittel der Netzfrequenz der Einphasen-Wechselspannung L, N anliegt.

Das Vektordiagramm der Fig. 3 zeigt, der Stromverteilung der Fig. 2 entsprechend, die resultierende Richtung des magnetischen Feldes bei einem zweipoligen Drehstrom-Induktionsmotor.

Das bedeutet mit anderen Worten, daß die Winkelgeschwindigkeit des magnetischen Feldes, entsprechend der synchronen Winkelgeschwindigkeit, die bei einem solchermaßen geschalteten Dreiphasen-Asynchron-Induktionsmotor den Läufer antreibt, lediglich ein Drittel der Geschwindigkeit beträgt, die sich bei einem in der üblichen Weise von einem Dreiphasennetz gespeisten Dreiphasenmotor erzielen läßt. Dreht daher beispielsweise ein zweipoliger Drehstrommotor mit einer Drehzahl von 3000 $min^{-1}$ bei einer Frequenz des speisenden Dreiphasen-Wechselstromnetzes von 50 Hz, dann ergibt sich sinngemäß bei einer Ansteuerung entsprechend den vorher gemachten Ausführungen und wie in Fig. 1 gezeigt lediglich noch eine Drehzahl von 1000 $min^{-1}$. Dies ist besonders vorteilhaft bei bestimmten Anwendungsfällen und soll im folgenden anhand eines bewußt numerisch dargestellten Ausführungsbeispiels (ohne den erfindungsgemäßen Rahmen hierdurch einzuschränken) anschaulich erläutert werden im Vergleich mit einem ansonsten üblicherweise verwendeten Einphasen-Induktionsmotors. Ein solcher Einphasen-Induktionsmotor wird verständlicherweise immer da eingesetzt, wo eben auch nur eine einphasige Speisespannung zur Verfügung steht, also beispielsweise bei den üblichen Haushaltsnetzen.

Weiter vorn ist schon erwähnt worden, daß ein Hauptvorteil vorliegender Erfindung bei solchen Anwendungsformen liegt, bei denen von den antreibenden Motoren auch sehr geringe Geschwindigkeiten verlangt werden, wie dies insbesondere auch beim Waschmaschinenbetrieb der Fall ist.

Üblicherweise wird daher bei einer Waschmaschine ein über zwei oder drei Geschwindigkeiten verfügender antreibender Elektromotor eingesetzt, der sowohl eine für hohe Schleudergeschwindigkeiten verwendete zweipolige Wicklung als auch eine oder zwei mehrpolige (4, 12, 16 oder 24) Wicklungen für untervielfache, also untersetzte Geschwindigkeiten umfaßt, wie sie für langsame Umdrehungszahlen oder Waschgänge, auch mit Reversierungen, erforderlich sind.

Diese umfassend benutzten Einphasen-Induktionsmotoren benötigen 2xn Spulenpaare, um bei einer Netzspannung von 50 Hz auf eine Drehzahl von 3000:n zu kommen, wobei n zwischen 1,2,3,4...12 liegt.

Demgegenüber benötigt der im vorhergehenden erläuterte Dreiphasen-Induktionsmotor, um auch hier wieder bei konkreten Zahlenbeispielen zu bleiben, 3xn Spulenpaare, um bei der gleichen Speisespannungsfrequenz von 50 Hz auf eine Drehzahl oder Winkelgeschwindigkeit von 1000:n zu kommen.

Dies bedeutet mit anderen Worten, daß bei einer angenommenen Polpaarzahl von 16 (n = 8) ein Einphasen-Induktionsmotor eine Drehzahl von 375 $min^{-1}$ aufweist und hierzu 16 Spulenpaare benötigt.

Im Gegensatz dazu gelingt es einem achtpoligen (n = 4) geschalteten Dreiphasen-Induktionsmotor, eine wesentlich stärker untersetzte niedrige Drehzahl von 250 $min^{-1}$ zu erreichen, wobei dann lediglich 12 Spulenpaare benötigt werden.

Die Vorteile, die sich daher durch den Einsatz eines geschalteten Dreiphasen-Induktionsmotors an einem Einphasen-Versorgungsnetz ergeben, sind daher überraschend groß, nicht nur hinsichtlich der Reduzierung des Aufwandes bei den Spulenpaaren um 25 %, sondern auch deshalb, weil sich eine wesentlich niedrigere Drehzahl für die langsamen Gänge erzielen läßt.

Ein besonders großer Vorteil ergibt sich dann, wenn man, hier durchaus vergleichbar mit den bisherigen Doppelstruktur-Einphasenmotoren, einen für zwei Drehgeschwindigkeiten geeigneten Motor verwendet, der für hohe Drehgeschwindigkeiten eine für sich gesehen übliche zweipolige Einphasenkonfiguration benutzt und für die niedrigen Geschwindigkeiten einen geschalteten Dreiphasen-Mehrpolinduktionsmotor einsetzt. Legt man in diesem Fall n = 4 zugrunde, dann ergibt sich ein kombinierter Induktionsmotor der erfindungsgemäßen Art mit zwei Drehgeschwindigkeiten von 3000 $min^{-1}$ und 250 $min^{-1}$, wobei man eine Gesamtmenge von 12 + 2 = 14 Spulenpaare benötigt, wodurch man im übrigen, wie weiter unten noch erläutert, in Verbindung mit einer mechanischen Untersetzung eine Waschmaschine mit gewünschter sehr hoher Schleuderdrehzahl und besonders geeigneten untersetzten Wasch- und Reversierdrehzahlen erreicht.

Vergleicht man einen solchen Motor mit 14 Spulenpaaren mit einem üblichen Einphasen-Kombinationsmotor, der wie weiter oben erwähnt für die beiden Drehgeschwindigkeiten zweipolig und sechzehnpolig ausgelegt ist und in diesem Falle Drehzahlen von 3000 $min^{-1}$ und 375 $min^{-1}$ liefert, dann benötigt ein solcher Motor 16 + 2 = 18 Spulenpaare. Auch dies verdeutlicht, daß der geschaltete Dreiphasen-Induktionsmotor wesentlich einfacher und kostengünstiger aufgebaut ist und darüber hinaus noch ein höheres Untersetzungsverhältnis liefert bei besserem Drehmoment und geringerem Aufwand.

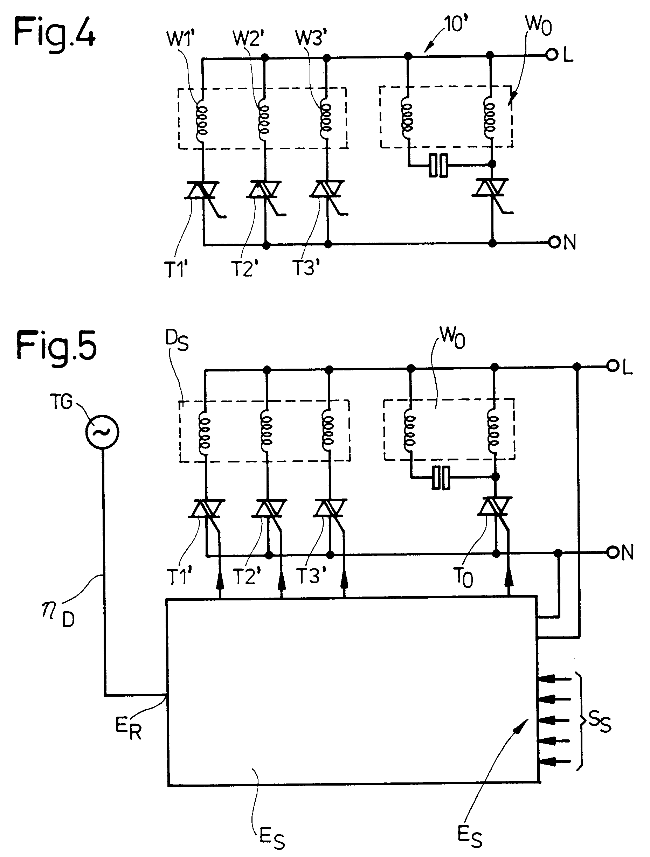

Ein erfindungsgemäßer Kombinationsmotor mit mehrpoliger, geschalteter Dreiphasenwicklung für niedrige Geschwindigkeit und einer zweipoligen Einphasenwicklung für hohe Geschwindigkeit ist schematisch in Fig. 4 dargestellt und mit 10' bezeichnet. Die drei Wicklungen für die geschaltete "Drehstromstruktur" sind mit W1', W2' und W3' bezeichnet; auch diese Wicklungen liegen über entsprechend vorgeschaltete Leistungshalbleiter, nämlich überlicherweise in beide Richtungen leitend schaltbare Triac T1', T2' und T3' am Einphasennetz L, N,und parallel zu diesem Ständerwicklungsbereich ist dann noch eine zweipolige Einphasen-Wechselstromwicklung Wo für hohe Geschwindigkeiten vorgesehen.

Das komplette Schaltbild ist in Fig. 5 gezeigt und umfaßt eine elektronische Steuerschaltung ES, der von einem Tachogenerator TG ein rückgeführtes Drehzahl-Istsignal $n_D$ am Eingang $E_R$ und weitere Steuersignale $S_S$ dem Eingangsbereich $E_S$ zugeführt sind. Diese weiteren Steuersignale können aus dem Programmablauf des jeweils mit einem solchen Motor ausgerüsteten Geräts, beispielsweise einer Waschmaschine-Ahlaufprogrammsteuerung herrühren oder aufgrund einer manuellen Betätigung durch eine Bedienungsperson.

Die elektronische Steuerschaltung ES steuert im vorgegebenen zyklischen Ablauf die Thyristoren T1', T2', T3' der hier bevorzugt achtpolig ausgelegten Drehstrommotorstruktur $D_S$ sowie alternativ den Thyristor To, der in Reihe mit dem zweipoligen Wicklungsbereich Wo der Einphasen-Induktionsmotorstruktur geschaltet ist. Sämtliche Wicklungen liegen an der einphasigen Netzspannung L, N parallel.

Aus einer solchen Induktionsmotor-Schaltungsstruktur ergeben sich noch weitere Vorteile, die darin bestehen, daß für den niedrigen Geschwindigkeitsbereich wie sonst notwendig Hilfskondensatoren nicht mehr eingesetzt zu werden brauchen; ferner läßt sich die Drehrichtung im niedrigen Geschwindigkeitsbereich problemlos durch Veränderung der Aktivierungsfrequenz von zwei der vorgesehenen Schalttriacs umkehren. Auch ist das erzielte Drehmomentwesentlich höher, verglichen mit Motoren bekannter Bauart und ähnlichen Größenabmessungen.

Verwendet man, wie in Fig. 5 gezeigt, einen mechanisch mit der Motorwelle gekoppelten Tachogenerator, dann läßt sich die Drehzahl in der gleichen Weise mittels der elektronischen Steuerschaltung ES überwachen und regelt, wie dies bei einigen bekannten Waschmaschinen, die Induktionsmotoren mit zwei Geschwindigkeiten verwenden, ebenfalls der Fall ist.

Durch entsprechende Auslegung der elektronischen Steuerschaltung ES ist ferner möglich, den jeder Wicklung der Mehrphasenmotorstruktur (und im übrigen auch den Wicklungen der Einphasen-Motorstruktur) zugeführten Spannungsmittelwert zu steuern, indem man den Anschnittwinkel, also die Leitphase des zugeordneten Triacs variiert. Hierdurch läßt sich auch abhängig zur gemessenen und der als Sollwert vorgegebenen Drehzahl das vom Motor erzeugte Drehmoment variieren.

Ferner ist die elektronische Steuerschaltung ES in der Lage, automatisch auf Einphasen-Hochgeschwindigkeitsbetrieb umzuschalten, wenn die Sollgeschwindigkeit gleich oder größer als die Synchrongeschwindigkeit im geschalteten Dreiphasenbetrieb ist.

Im einzelnen kann die Induktionsmotorstruktur mit zugeordneter elektronischer Steuerschaltung der Fig.5 so ausgelegt sein, daß ein achtpoliger Dreiphasen-Induktionsmotor und ein zweipoliger Einphasen-Induktionsmotor kombiniert gebildet sind, was sich für Waschmaschinen eignet, die unter Benutzung eines geeigneten Keilriemen-Übertragungsverhältnisses Trommelschleudergeschwindigkeiten mit Drehzahlen zwischen 1000 $min^{-1}$ bis zu 1500 $min^{-1}$ erreichen sollen.

So erzielt man beispielsweise unter Zugrundelegung eines Untersetzungsverhältnisses über die Keilriemenübertragung von numerisch Ü = 2,8 eine maximale Trommeldrehzahl von 1070 $min^{-1}$ sowie im über die Triac's geschalteten Betrieb eine bevorzugt langsame Drehzahl von lediglich 89 $min^{-1}$ - diese Daten können einer Waschmaschine zugrunde gelegt werden mit einer mittleren Schleuderdrehzahl von 1000 $min^{-1}$.

Im niedrigen Drehzahlbereich wird Drehzahl und der Reversierbetrieb von der elektronischen Steuerschaltung überwacht und gesteuert, indem man die geschaltete Dreiphasen-Motorstruktur verwendet, während eine geregelte Drehzahl lediglich für die hohen Schleuderdrehzahlen angestrebt werden muß, wenn man die zweipolige Einphasen-Konfiguration hierfür verwendet. Ein Antriebssystem mit diesen Daten ähnelt bis zu einem gewissen Grade einem Universalmotor mit einer elektronischen Steuerschaltung, ist jedoch wesentlich weniger kostenaufwendig und verfügt darüber hinaus noch über im Betrieb sich ergebende Vorteile, die darin bestehen, daß

- bei Ausfall eines Triacs, wenn dieser beispielsweise in einen Kurzschlußzustand übergeht, die Drehzahl nicht ansteigt, wie dies bei einem Universalmotor der Fall ist;
- man benötigt keinen zusätzlichen elektromechanischen Schalter für Reversiervorgänge;
- eine mit einer solchen Antriebsstruktur ausgerüstete Waschmaschine arbeitet wesentlich geräuschloser und erzeugt auch wesentlich geringere Hochfrequenzstörungen;
- das in der zweipoligen Einphasen-Induktionsmotorkonfiguration zur Verfügung stehende niedrige Drehmoment verhindert einen Übergang in den Schleuderbetrieb, wenn sich innerhalb der Waschmaschine noch Wasser befinden sollte, also von dieser Seite eine Störung aufgetreten ist;
- schließlich wird dann, wenn der Tachogenerator ausfällt, die maximale Trommeldrehzahl auf die Synchrongeschwindigkeit begrenzt, die bei Induktionsmotoren ja niemals voll erreicht wird.

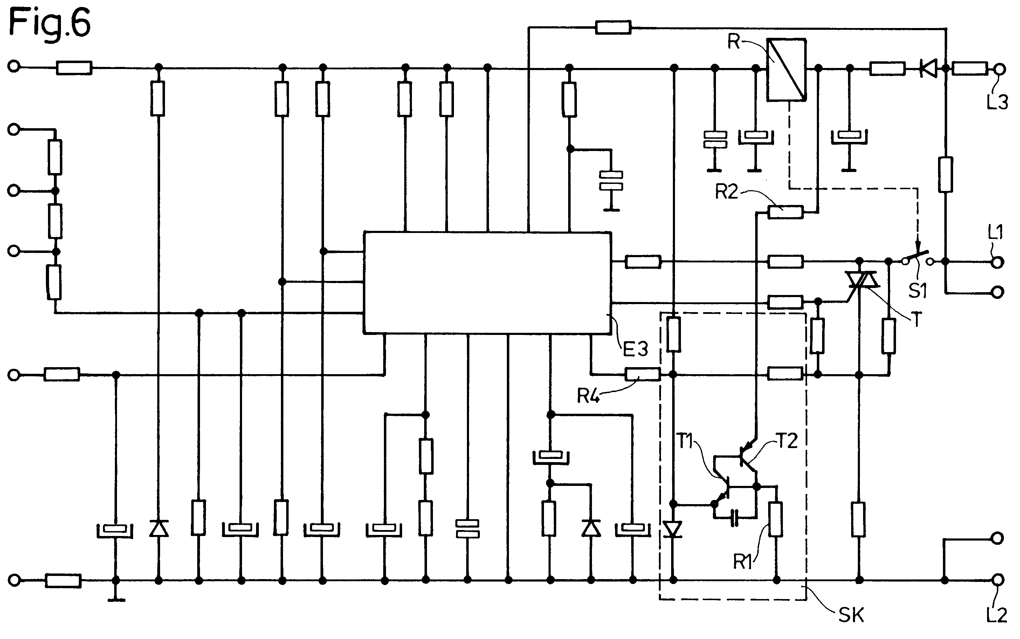

In der Darstellung der Fig. 6 ist schließlich noch eine Schutzschaltung in Verbindung mit einer Triac-Ansteuerung dargestellt. Der Triac ist allgemein mit T bezeichnet und wird hier von einem für sich gesehen üblichen integrierten Baustein IC1 angesteuert, der beispielsweise als analoger Geschwindigkeitsregler ausgebildet sein kann und unter der Bezeichnung TDA 1085C auch erworben werden kann.

Auf die Vielzahl der äußeren Beschaltungen des IC1 braucht nicht weiter eingegangen zu werden, da dies üblich ist; man erkennt jedoch, daß ein zusätzlicher, von einem Relais R geschalteter, als Schließer ausgebildeter Schalter S1 vorgesehen und in Reihe mit den Triac-Ausgangsanschlüssen L1, L2 geschaltet ist. Das Relais R seinerseits liegt mit seiner Relaiswicklung in Reihe mit dem Versorgungsanschluß L3 für den IC1 und ist daher im Normalfall erregt, wodurch es seinen Relaiskontakt S1 geschlossen hält.

Es ist ein Sensorkreis Sk vorgesehen, der in geeigneter Weise einen Kurzschluß des Triacs T erfaßt, entweder durch Abtasten des an den Triac-Hauptelektroden anliegenden Potentials oder indem auf die spezielle Wirkungsweise des IC1 abgestellt wird. Spricht der Sensorkreis Sk an, dann wird das Relais R stromlos geschaltet und öffnet seinen in Reihe mit den Triac-Anschlüssen liegenden Relaisschalter S1. Bei der in Fig. 6 vorliegenden Schaltung arbeitet der Drehzahlregel-IC1 TDA 1085 C so, daß an einem Anschluß E3 die Spannung nur dann auf negative Werte geht, wenn der Triac einen Kurzschluß erlitten hat. Tritt dies auf, dann ergeben sich am Anschluß E3 jedes Mal, wenn der Motor reversiert wird, negative Impulse. Dies führt dazu, daß über den Widerstand R4 die Kathode des Transistors T1 einer als gemeinsamer Thyristor wirkenden Transistor-Schaltungskombination aus T1 und T2 negativ wird, wobei der Gate-Anschluß von T1 über R1 an Masse liegt. Sind die Transistoren T1, T2 einmal leitend durchgeschaltet, dann ergibt sich ein Bypass-Strompfad über R2, T2, T1 und D1 nach Masse, so daß die Schaltung und hierdurch auch das Relais R stromlos wird. Es versteht sich, daß hier auch ein normaler Thyristor verwendet werden kann.

Ein weiterer vorteilhafter Gesichtspunkt bei vorliegender Erfindung, den es noch hervorzuheben gilt, ergibt sich in Verbindung mit der Gesamtschaltung nach Fig. 5 dann, wenn man die Reihentriacs T1', T2' und T3' während "ihrer" jeweils leitenden Phase nicht voll durchschaltet, sondern, was schon kurz angesprochen worden ist, hier noch mit den zusätzlichen Möglichkeiten des Phasenanschnitts arbeitet - mit anderen Worten: es ist auch möglich, während der jeweiligen Durchlaßphase für jede Wicklung den Zeitraum durch Phasenanschnitt stärker zu begrenzen, während welchem der jeweilige Triac tatsächlich leitend ist, also die entsprechende Wicklung effektiv an Netzspannung legt. Hierdurch kann man sehr genau bestimmte Drehzahlen nachfahren, insbesondere unter Verwendung des Istwert-Signals vom Tachogenerator TG. Geeignete Bausteine für eine Drehzahlsteuerung mit Hilfe von im Phasenanschnitt arbeitenden Reihentriacs sind zum Beispiel die weiter vorn schon erwähnten integrierten Schaltungen, so, wie sie in Fig. 6 dargestellt sind (IC-Baustein TDA 1085 C).

Es läßt sich daher unter ergänzender Anwendung einer Phasenanschnittssteuerung über die ohnehin vorhandenen Reihentriacs eine besonders vielfältige und beliebigen Sollwert-Vorgaben folgende Drehzahlsteuerung realisieren.

Abschließend wird darauf hingewiesen, daß die Ansprüche und insbesondere der Hauptanspruch Formulierungsversuche der Erfindung ohne umfassende Kenntnis des Stands der Technik und daher ohne einschränkende Präjudiz sind. Daher bleibt es vorbehalten, alle in der Beschreibung, den Ansprüchen und der Zeichnung dargestellten Merkmale sowohl einzeln für sich als auch in beliebiger Kombination miteinander als erfindungswesentlich anzusehen und in den Ansprüchen niederzulegen sowie den Hauptanspruch in seinem Merkmalsgehalt zu reduzieren.

**Patentansprüche**

1. Verfahren zum Betrieb von elektrischen Antrieben, insbesondere von zwei- und mehrpoligen asynchronen Induktionsmotoren zum Antrieb von Geräten mit mindestens zwei erheblich unterschiedlichen Arbeitsgeschwindigkeiten wie Waschmaschinen (Schleudern; Waschgang) u. dgl., dadurch gekennzeichnet, daß mindestens ein zwei- oder mehrpoliger Mehrphasen-Asynchroninduktionsmotor dadurch an einer Einphasen-Netzversorgung (L, N) betrieben wird, daß jeweils ein mit jeder Wicklung (W1, W2, W3; W1', W2', W3') in Reihe liegender Leistungshalbleiterschalter (Triac T1, T2, T3; T1', T2', T3') mit Bezug auf die anderen Reihenhalbleiterschalter zeitlich versetzt und aufeinanderfolgend zu diesen lediglich während einer Halbwelle der Einphasen-Versorgungsspannung leitend gesteuert wird, derart, daß sich ein rotierendes Magnetfeld mit einer lediglich einem auf die Anzahl der gesteuerten Phasen bezogenen Bruchteil der speisenden einphasigen Wechselspannungsfrequenz entsprechende Frequenz bildet.

2. Verfahren nach Anspruch 1, dadurch gekennzeichnet, daß die Reihentriacs (T1, T2, T3; T1', T2', T3') eines zwei- oder mehrpoligen Dreiphasen-Asynchroninduktionsmotors mit drei Wicklungen (W1, W2, W3; W1', W2', W3') von einer elektronischen Steuerschaltung in zeitlicher Abfolge sowohl für positive als auch negative Halbwellen leitend gesteuert werden und daß im gleichen Motorgehäuse die Struktur eines Einphasen-Asynchronmotors angeordnet wird, dessen Wicklungsbereich (Wo) ebenfalls über einen eigenen Leistungshalbleiterschalter (Triac To) dann an die Einphasen-Netzversorgung (L, N) geschaltet wird, wenn die Ansteuerung sämtlicher Reihentriacs der Mehrphasen-Induktionsmotorstruktur abgeschaltet wird.

3. Vorrichtung zum Betrieb von elektrischen Antrieben, insbesondere von zwei- und mehrpoligen asynchronen Induktionsmotoren zum Antrieb von Geräten mit mindestens zwei erheblich unterschiedlichen Arbeitsgeschwindigkeiten wie Waschmaschinen (Schleudern; Waschgang) u. dgl., dadurch gekennzeichnet, daß mindestens eine zwei- oder mehrpolige Mehrphasen-Induktionsmotorstruktur (10) vorgesehen ist, mit einem ersten gemeinsamen Anschlußpunkt (P) für die jeweiligen Phasenwicklungen (W1, W2, W3; W1', W2', W3'), wobei die jeweils freien Enden dieser Phasenwicklungen über gesteuerte Halbleiterschalter mit dem anderen Netzanschluß verbunden und die Halbleiterschalter in zeitlicher Abfolge aufeinanderfolgend lediglich jeweils während einer Halbwelle der EinphasenVersorgungsspannung leitend gesteuert sind.

4. Vorrichtung nach Anspruch 3, dadurch gekennzeichnet, daß zur Realisierung von mindestens zwei unterschiedlichen Drehzahlen in einem Motorgehäuse eine erste zwei- oder mehrpolige Mehrphasen-Induktionsmotorstruktur mit mit den Phasenwicklungen (W1', W2', W3') in Reihe geschalteten steuerbaren Triacs (T1', T2', T3') sowie zusätzlich eine zwei- oder mehrpolige Einphasen-Induktionsmotorstruktur (10') angeordnet sind.

5. Vorrichtung nach Anspruch 4, dadurch gekennzeichnet, daß zum Betrieb von Waschmaschinen mit elektronisch umschaltbaren Drehzahlen für Schleudergang und Waschgang ein achtpoliger Dreiphasen-Induktionsmotor mit geschalteten Reihentriacs und ein zweipoliger Einphasen-Induktionsmotor vorgesehen sind, die beide parallel an die gleiche Einphasennetzversorgung (L, N) angeschlossen sind.

6. Vorrichtung nach Anspruch 4 oder 5, dadurch gekennzeichnet, daß eine elektronische Steuerschaltung (ES) vorgesehen ist, der ein rückgeführtes Tachosignal ($n_D$) als Drehzahlistwert und für den Programmablauf bei einer Waschmaschine maßgebende Steuersignale (Ss) zugeführt sind und die die Reihentriacs (T1', T2', T3') der Dreiphasen-Induktionsmotorstruktur bei abgeschaltetem Reihentriac (To) für die Einphasen-Induktionsmotorstruktur aufeinanderfolgend für jeweils eine Halbwelle der Versorgungsspannung triggert und für den Reversierbetrieb die zeitliche Abfolge der Triggerimpulse zu zwei der vorhandenen drei Reihentriacs zeitlich vertauscht.

7. Vorrichtung nach einem der Ansprüche 3 bis 6, dadurch gekennzeichnet, daß eine Triac-Schutzschaltung (R; S1; Sk) vorgesehen ist, die einen in einen Kurzschlußzustand übergegangenen Reihentriac mittels eines Relaisschalters (S1) aus dem Stromkreis herausschaltet, indem ein in Reihe mit der jeweiligen spezifischen Triac-Ansteuerschaltung liegendes Relais (R) stromlos geschaltet wird.

8. Vorrichtung nach Anspruch 7, dadurch gekennzeichnet, daß ein Sensorkreis (Sk; T1, T2, R1) vorgesehen ist, der bei Auftreten von negativen Impulsen an einem den Triac steuernden integrierten Schaltkreis (IC1) im Reversierbetrieb umschaltet und einen Bypass-Strompfad (R2, T2, T1, D1) zur Abschaltung des Relais und einer hierdurch bewirkten Öffnung seines Relaiskontaktes (S1) bildet.

9. Vorrichtung nach einem der Ansprüche 3 bis 8, dadurch gekennzeichnet, daß jeder der Reihentriacs (T1', T2', T3') für die Dauer der für ihn jeweils maßgebenden Halbwelle von der zugeordneten elektronischen Steuerschaltung (ES) ergänzend im Sinne einer Phasenanschnittssteuerung angesteuert ist, derart, daß die Dauer, während welcher er durchgeschaltet ist, auch kürzer als eine Halbwelle ist.

10. Vorrichtung nach Anspruch 9, dadurch gekennzeichnet, daß die Phasenanschnittssteuerung jedes Reihentriacs unter Einbeziehung des rückgeführten Tachogenerator-Istwert-Signals ($n_d$) sowie vorgegebener Solldrehzahlen im Sinne einer Drehzahlregelung erfolgt.

**Fig.1**

**Fig.2**

**Fig.3**

EP 0 489 970 A1

**Fig.4**

**Fig.5**

# Fig.6

EP 0 489 970 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2500234 (ASTRO DYNAMICS INC) <br> * das ganze Dokument * | 1-5 | H02P5/402 |
| A | --- | 6, 9, 10 | |
| X | US-A-4243926 (CH.A. PHILLIPS) <br> * Zusammenfassung; Figur 2 * <br> --- | 1, 3 | |
| A | ELEKTRONIK <br> vol. 24, no. 7, 1975, DE <br> Seiten 72 - 74; E. UEBERREITER: <br> "PHASENANSCHNITT- UND SCHWINGUNGSPAKETSTEUERUNG <br> MIT INTEGRIERTEN SCHALTUNGEN" <br> * das ganze Dokument * <br> --- | 1, 3, 6 | |
| A | DE-A-3119794 (KAUTT & BUX KG) <br> * Seite 6, Zeile 12 - Seite 7, Zeile 30; Figur 1 * <br> ----- | 7, 8 | |

|  |
|---|
| **RECHERCHIERTE SACHGEBIETE (Int. Cl.5)** |
| H02P <br> D06F <br> H02H |

Der vorliegende Recherchenbericht wurde für alle Patentansprüche erstellt

| Recherchenort | Abschlußdatum der Recherche | Prüfer |
|---|---|---|
| DEN HAAG | 07 AUGUST 1991 | BEYER F. |